# EUROPÄISCHE PATENTSCHRIFT

(11) **EP 1 721 520 B1**
(45) Veröffentlichungstag und Bekanntmachung des Hinweises auf die Patenterteilung: **01.09.2010**
(21) Anmeldenummer: 06005108.3
(22) Anmeldetag: 13.03.2006
(51) Int. Cl.: A01K 5/00

(54) **Futtermischer**
Feed mixer
Mélangeur de fourrage

(30) Priorität: 11.05.2005 DE 102005021851
(43) Veröffentlichungstag der Anmeldung: 15.11.2006
(73) Patentinhaber: Trioliet Mullos B.V., 7570 AC Oldenzaal (NL)
(72) Erfinder: van der Plas, Nicolaas, 7576 WX Oldenzaal (NL)
(74) Vertreter: Grünecker, Kinkeldey, Stockmair & Schwanhäusser Anwaltssozietät

(56) Entgegenhaltungen:
- DE-U1- 20 119 534
- US-A- 5 462 354
- US-A1- 2004 013 035

## Beschreibung

Die Erfindung bezieht sich auf einen Futtermischer der im Oberbegriff von Anspruch 1 erläuterten Art und ein Verfahren zum Antreiben eines Mischwerkzeuges eines Futtermischers der im Oberbegriff von Anspruch 15 erläuterten Art.

Ein derartiger Futtermischer und ein derartiges Verfahren sind aus der DE 201 19 534 U1 bekannt. Der bekannte Futtermischer enthält eine Antriebsvorrichtung, bei der zwischen dem Antrieb und dem Mischwerkzeug ein automatisch schaltbares Getriebe vorgesehen ist. Der Antrieb enthält eine selbsttätige Regelung, die während der gesamten Einsatzdauer das momentane Drehmoment feststellt und an eine Steuervorrichtung sendet. Die Steuervorrichtung gibt bei Erreichung eines Drehmoments, welches der Nennleistung des Antriebsmotors zugeordnet ist, Signale an eine Schaltvorrichtung des Getriebes, die daraufhin das Getriebe entsprechend schaltet. Eine direkte Drehmomentmessung ist jedoch sehr aufwendig. In der Praxis hat es sich jedoch herausgestellt, dass drehmomentgesteuerte Schaltungen dazu tendieren, zu häufig und zyklisch zu schalten. Dadurch verliert man die Kontrolle über die Mischgeschwindigkeit.

Futtermischer finden in der Landwirtschaft zunehmend Verbreitung und dienen dazu, Futter zu transportieren, zu mischen und zu verteilen. Zu diesem Zweck enthalten Futtermischer einen Mischbehälter, in dem wenigstens ein Mischwerkzeug bewegt wird. Üblicherweise sind die Mischwerkzeuge als Mischschnecken ausgebildet, die um eine vertikale Achse drehend angetrieben sind.

Futtermischer sind meist über einen Fahrantrieb verfahrbar, wobei der Fahrantrieb entweder ein in jedem landwirtschaftlichen Betrieb vorhandener Schlepper sein kann, an den der Futtermischer angehängt wird. Es ist jedoch auch möglich, andere Fahrantriebe vorzusehen.

Der Antrieb des Mischwerkzeugs wird vom Fahrantrieb (Verbrennungsmotor) abgeleitet, was bei Verwendung eines Schleppers über dessen Zapfwelle geschieht. Die bei der Benutzung des Futtermischwagens an den Mischwerkzeugen auftretenden Belastungen sind jedoch sehr unterschiedlich. Beispielsweise ist ein hohes Drehmoment erforderlich, wenn die Mischwerkzeuge ein eingefülltes Futter erstmalig in Bewegung versetzen. Dagegen ist das erforderliche Drehmoment sehr gering, wenn bei fast leerem Futtermischer die letzten Reste des Futters aus dem Mischbehälter herausgeschoben werden. Um diesen Anforderungen gerecht zu werden, wurde bereits vorgeschlagen, in den Antrieb der Mischwerkzeuge ein Getriebe einzubauen, das die vom Schlepper gelieferte Drehzahl über- oder untersetzt, so dass unterschiedliche Drehmomente bereitgestellt werden können.

Ein Futtermischer, der mit einem Getriebe versehen ist, ist beispielsweise aus der US 5 462 354 bekannt. Das Getriebe ist ein automatisch schaltendes Getriebe, das so ausgelegt ist, dass es jeweils bei bestimmten, vorher festgelegten oder einstellbaren Drehzahlwerten in den nächst höheren oder nächst niedrigeren Gang schaltet. So wird beispielsweise beim Anlaufen der Mischeinrichtung bei leerem Mischbehälter nach dem Anschalten des Antriebs über die Zapfwelle automatisch und sehr schnell in den Gang mit der höchsten Drehzahl geschaltet, so dass das Mischwerkzeug mit seiner maximalen Drehzahl dreht. In einem weiteren Ausführungsbeispiel ist ein Drehmomentwandler vorgesehen. Wenn Futter in den Mischbehälter eingebracht wird erhöht sich das erforderliche Drehmoment wegen der Reibung und dem Zusammenhalt des Futters im Mischer. Wird die Belastung so groß, dass die Drehzahl unter einen Schaltpunkt fällt, so wird automatisch zurückgeschaltet. Der bekannte Futtermischer wurde ursprünglich für mittlere Beladungsgrößen bis zu 20 m³ ausgelegt. Für größere Maschinen (drei Mischwerkzeuge, 30 m³ und mehr) ist ein automatisches Getriebe der beschriebenen Art nicht mehr geeignet. Ein Drehmomentwandler ist nicht geeignet, bei hoher Belastung anzufahren, und arbeitet nur effektiv bei hohem Drehzahlen (oberhalb 1000 U/min). Auch ist ein schneller und wiederholter Wechsel zwischen einem hohen und einem niedrigen Gang ein Problem, da die Drehmomentanforderung während des Mischzyklus nicht konstant ist. In der Praxis hat es sich herausgestellt, dass derartige automatische Getriebe dazu tendieren, zu häufig und zyklisch zu schalten. Dadurch verliert man die Kontrolle über die Mischgeschwindigkeit. Der in einem Ausführungsbeispiel verwendete Drehmomentwandler arbeitet nicht effektiv mit einer niedrigen Antriebsgeschwindigkeit. Wenn der Antrieb (der Schlepper) anläuft und das Mischwerkzeug nicht ziehen kann, wird der Drehmomentwandler durchrutschen und ausbrennen. Das Gleiche geschieht, wenn die Antriebseinrichtung (der Schleppermotor) bei einer hohen Belastung abgewürgt wird. Bei diesem bekannten Futtermischer können bestimmte Gänge gegen Hochschalten durch Betätigen eines Handhebels blockiert werden, wenn dies aus betrieblichen Gründen gewünscht ist.

Ein weiterer Futtermischer mit einem zwischen dem Antrieb und dem Mischwerkzeug eingeschalteten Getriebe ist aus der US 6 758 426 bekannt. Bei diesem Futtermischer wird versucht, das Problem einer unerwünschten automatischen Schaltung durch die Möglichkeit eines manuellen Eingriffs in die Schaltvorgänge zu lösen. Manuell schaltbare Getriebe sind jedoch für Futtermischer weniger geeignet. Futtermischer werden meist im Ein-Mann-Betrieb betätigt, d.h. die Bedienperson muss zunächst den Antrieb des Mischwerkzeuges starten, dann den Schlepper oder dgl. verlassen und mit einem weiteren Arbeitsmittel, beispielsweise einer Beladehilfe oder dgl. den Mischbehälter füllen. In dieser Zeit kann nicht manuell geschaltet werden.

Der Erfindung liegt somit die Aufgabe zugrunde, die oben genannten Nachteile des Standes der Technik zu überwinden.

Insbesondere liegt der Erfindung die Aufgabe zugrunde, ein unerwünschtes Pendeln zwischen den Gängen zu vermeiden.

Insbesondere liegt der Erfindung die Aufgabe zugrunde, einen Futtermischer und ein Verfahren zu seinem Betrieb bereitzustellen, bei dem die Drehzahl des Mischwerkzeugs auf kontrollierte und vorbestimmte Weise gesteuert werden kann.

Insbesondere liegt der Erfindung die Aufgabe zugrunde, einen Futtermischer und ein Verfahren zu seinem Betrieb bereitzustellen, die so ausgebildet sind, dass Beschädigungen des Antriebs oder des Getriebes wirksam verhindert werden.

Diese Aufgaben werden durch einen Futtermischer gemäß Anspruch 1 gelöst. einem vorbestimmten Grenzwert für wenigstens die höhere Schaltstufe, die mit der Steuereinrichtung derart verbunden ist, dass ein Antrieb des Mischwerkzeugs über die höhere Schaltstufe nur dann möglich ist, wenn das festgestellte Gewicht den Grenzwert nicht übersteigt, gelöst.

Die Aufgaben werden weiterhin durch ein Verfahren gemäß Anspruch 15 gelöst.

Ausführungsbeispiele der Erfindung werden nachfolgend anhand der Zeichnungen näher erläutert. Es zeigen:
- Fig. 1: einen erfindungsgemäß ausgerüstete Futtermischer in schematischer Darstellung in Seitenansicht,
- Fig. 2: eine geschnittene, schematische Darstellung eines ersten Ausführungsbeispiels einer erfindungsgemäßen Antriebsvorrichtung, und
- Fig. 3: eine geschnittene, schematische Darstellung eines zweiten Ausführungsbeispieles einer erfindungsgemäßen Antriebsvorrichtung.

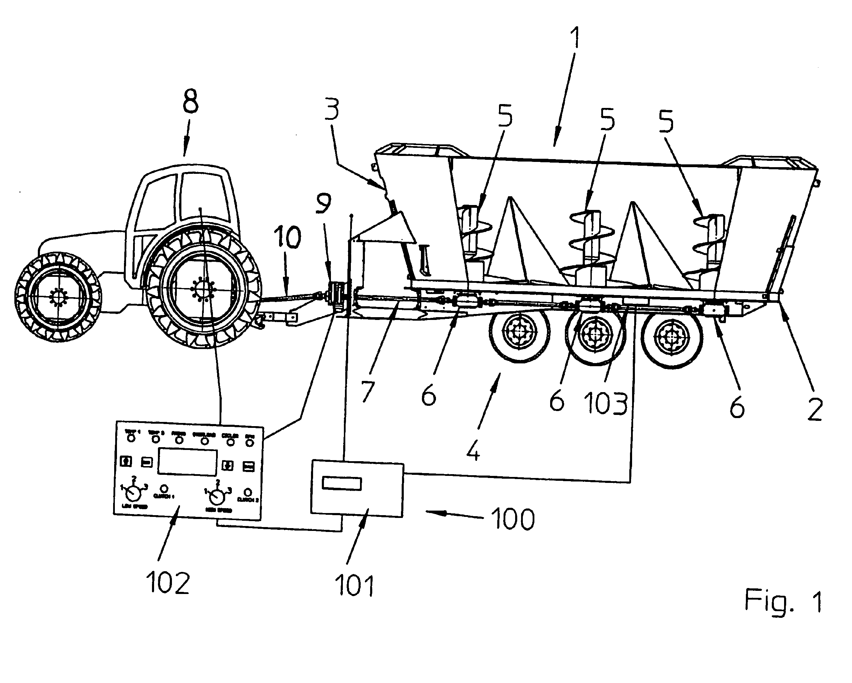

Fig. 1 zeigt in schematischer Darstellung einen Futtermischer 1, der im dargestellten Ausführungsbeispiel als Mischwagen ausgebildet ist. Der Futtermischer 1 enthält einen Rahmen 2 mit einem Behälter 3, der über ein Fahrwerk 4 verfahrbar ist. Der Behälter 3 ist in Fig. 1 geschnitten dargestellt, um das Innere zu zeigen. Der Behälter 3 ist in üblicher Weise über eine obere Öffnung befüllbar und enthält die üblichen seitlichen oder hinteren Öffnungen, durch die das eingefüllte Futter aus dem Behälter 3 herausgefördert werden kann.

Im Inneren des Behälters 3 sind im dargestellten Ausführungsbeispiel drei Mischwerkzeuge 5 vorgesehen, die hier als Mischschnecken ausgebildet sind, die jeweils um eine vertikale Drehachse drehend angetrieben werden können. Die Erfindung ist jedoch auch für Futtermischer mit anderen Mischwerkzeugen oder einer abweichenden Anzahl von Mischschnecken einsetzbar. Jede der Mischschnecken 5 wird über jeweils ein Winkelgetriebe 6 von einer gemeinsamen Antriebswelle 7 angetrieben. Die Antriebswelle 7 wird von einem Fahrantrieb, d.h. insbesondere einem Motor eines Schleppers 8, der den Futtermischer 1 zieht, über ein automatisch schaltbares Getriebe 9 angetrieben. Der Antrieb der Antriebswelle 7 über das Getriebe 9 erfolgt bei Verwendung eines Schleppers 8 über dessen Zapfwelle 10. Das Getriebe 9 enthält eine Vielzahl von Getriebegliedem, die für einen Direktantrieb ausgebildet sind oder eine Veränderung der Drehzahl der Zapfwelle 10 bewirken, so dass die Antriebswelle 7 und somit die Mischwerkzeuge 5 mit unterschiedlichen Drehzahl angetrieben werden können.

Die bislang beschriebenen Einzelheiten entsprechen der konstruktiven Ausgestaltung herkömmlicher Futtermischer und müssen demzufolge nicht nochmals im Einzelnen erläutert werden.

Der Futtermischer 1 enthält weiterhin eine Steuereinrichtung 100, die einen Computer oder Prozessor und eine Anzeige- und Bedientafel 102 enthält. Die Tafel 102 ist bevorzugt dem Schlepper 8 zugeordnet und für die Bedienperson leicht erreichbar und einsehbar. Die Tafel 102 enthält Informationsmittel und gegebenenfalls auch Wahlmittel zum Auswählen einer bevorzugten Betriebsweise und/oder zum Einstellen von Grenzwerten, wie dies nachfolgend noch näher erläutert wird. Die Steuereinrichtung 100 übemimmt das Schalten des Getriebes 9 und ist zu diesem Zweck in üblicher Weise mit dem Getriebe 9 verbunden.

Dem Futtermischer 1, insbesondere dessen Behälter 3 ist eine Einrichtung 103 zum Feststellen des Gewichts zugeordnet, die z.B. einen Wiegecomputer 101 enthält, der zur Gewichtsanzeige beim Beladen oder Ausdosieren des Futters eingesetzt wird und den Fahrer über das aktuelle Gewicht informiert. Die Gewichts-Feststelleinrichtung kann einen der üblichen Gewichtssensoren mit Wiegestäben oder andere Einrichtungen enthalten, mit denen ein Gewicht feststellbar ist und mit denen ein von der Steuereinrichtung 100 verarbeitbares Signal erzeugt werden kann. Bei Verwendung einer Vielzahl von Sensoren oder Wiegestäben können diese zu einer "Junction box" zusammen gefasst werden, und die Gewichtssignale gehen addiert zur Steuereinrichtung 100. Jedes Signal kann jedoch auch direkt zur Steuereinrichtung 100 geleitet werden. Es kann jedoch auch nur ein einziger Sensor oder Wiegestab genommen werden, da diese eine Relation zum Gesamtgewicht haben. Die Gewichts-Feststelleinrichtung 103 kann so angeordnet und ausgebildet sein, dass sie lediglich das Gewicht des Futters feststellt. Es ist jedoch auch möglich, das Gesamtgewicht von eingefülltem Futter und Futtermischer festzustellen und das vorab bestimmte Leergewicht des Futtermischers 1 abzuziehen. Das Gewicht des eingefüllten Futters kann jedoch auch berechnet werden, beispielsweise wenn die Art des Futters bekannt ist und vorab in die Steuervorrichtung eingegeben wird, und wenn das Volumen des eingefüllten Futters während des Einfüllens und/oder während der Ausgabe des Futters aus dem Behälter 3 festgestellt und an die Steuereinrichtung 100 übermittelt wird. So kann beispielsweise das Gewicht des noch im Behälter 3 vorhandenen Futters aus einem Futterverteil-Programm herausgerechnet werden, wobei das Futterverteil-Programm genau festlegt, an welchem Futterplatz wie viel Futter ausgegeben wird. In die Berechnung des Gewichts kann auch die bekannte Konsistenz des Futters eingerechnet werden, beispielsweise ob ein besonders dichtes Futter (Ballenform) oder ein lockeres und leicht zu zerteilendes Futter eingegeben wird. Auch die Art des Futters (langfasrig oder kurzfasrig, nass oder trocken) kann von der Steuereinrichtung 100 berücksichtigt werden. Diese Parameter werden bevorzugt über die Anzeigetafel 102 manuell eingegeben.

Die Steuereinrichtung 100 erzeugt aus den verfügbaren, oben beschriebenen Parametern ein Signal, das äquivalent zum Gewicht des Futters im Behälter 3 ist, wobei dieser Gewichtswert gegebenenfalls durch die oben beschriebenen Parameter, die den Kraftbedarf beim Mischen beeinflussen, modifiziert werden kann.

Die Steuerung 100 enthält einen Gewichts-Grenzwert, der äquivalent für die Belastungsfähigkeit aller Antriebselemente, insbesondere der Zapfwelle 10 und des Getriebes 9 ist. Bevorzugt ist dieser Grenzwert einstellbar, so dass er vom Benutzer auf die speziellen konstruktiven Ausgestaltungen beispielsweise der Zapfwelle 10 oder dgl. sowie der zur Verfügung stehenden Antriebsleistung abgestimmt werden kann. Da der Leistungsbedarf für unterschiedliche Futterrationen unterschiedlich sein kann, sollte für die Steuerung die Möglichkeit gegeben sein, den Grenzwert pro Futterration einzustellen. Die Grenzwerte und/oder das Gewicht kann von der Bedienperson auf "0" gestellt werden.

Ein für den dargestellten Futtermischer 1 mit seinen drei Mischschnecken 5 geeigneter Gewichts-Grenzwert liegt bei 10000 kg.

Die Steuerung 100 vergleicht den festgestellten oder berechneten Gewichtswert mit den Gewichts-Grenzwert und entscheidet ob geschaltet werden muss oder ob geschaltet werden darf. Die Steuereinrichtung 100 verhindert beispielsweise, dass auf einen höhere Gang mit höherer Drehzahl an den Mischwerkzeugen geschaltet werden kann, wenn der Grenzwert überschritten wird. Die Steuerung 100 entscheidet weiterhin, dass bei Überschreitung des Gewichts-Grenzwertes auf einen niedrigeren Gang mit geringerer Drehzahl und demzufolge höherem Drehmoment an den Mischwerkzeugen 5 geschaltet werden muss, und tut dies automatisch.

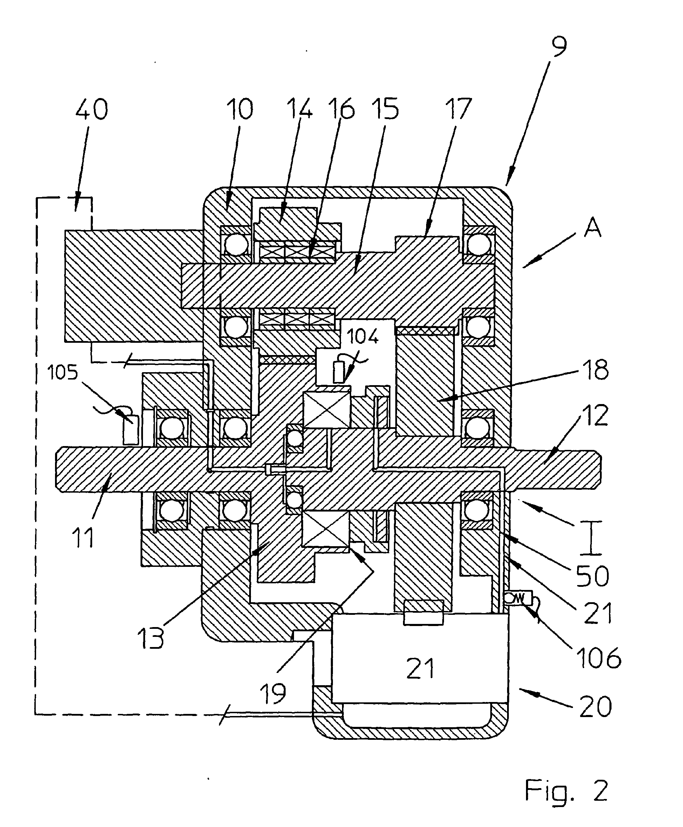

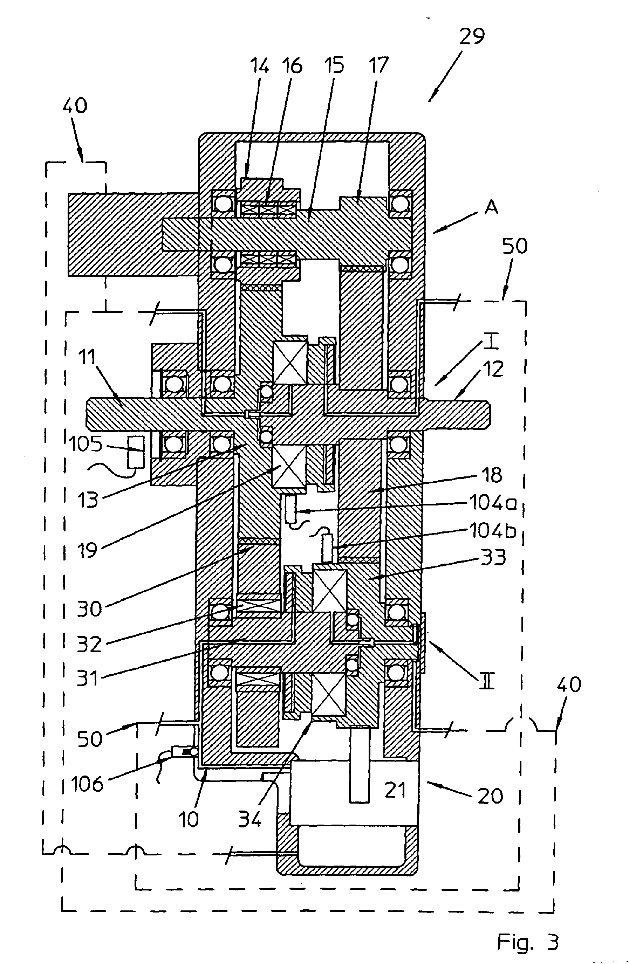

Ausführungsbeispiele besonders geeigneter Getriebe sind in den Fig. 2 und 3 ersichtlich. Diese Getriebe basieren auf der Konstruktion wie sie in der nicht vorveröffentlichten US SN 11/041,083 (deutsche Gebrauchsmusteranmeldung 20 2004 00 1818.7), deren Offenbarungsgehalt hiermit durch Bezugnahme eingeschlossen wird, beschrieben wird.

Fig. 2 zeigt ein erstes Ausführungsbeispiel eines erfindungsgemäß ausgebildeten automatischen Getriebes 9, in Form eines reinen Stirnradgetriebes. Das Getriebe 9 ist ein Reduziergetriebe und weist ein Gehäuse 10 auf, in dem eine Eingangswelle 11 und eine Ausgangswelle 12 gelagert sind, wobei im dargestellten Ausführungsbeispiel die Eingangswelle 11 koaxial mit der Ausgangswelle 12 angeordnet ist. Beim Einsatz als Reduziergetriebe in Figur 1 ist die Eingangswelle 11 mit der Zapfwelle 10 und die Ausgangswelle 12 mit der Antriebswelle 7 verbunden.

Das Getriebe 9 ist ein schaltbares Stufengetriebe mit Getriebegliedern in Form von Zahnrädern und enthält eine erste Getriebestufe A, die als Anlaufstufe für einen Anlaufbetrieb ausgebildet ist und für eine Untersetzung der höheren Drehzahl der Eingangswelle 11 auf eine niedrigere Drehzahl an der Ausgangswelle 12 sorgt. Das Getriebe 9 enthält weiterhin eine Getriebestufe I, die eine höhere Drehzahl an der Ausgangswelle 12 liefert, wie sie beispielsweise zum Mischen und Austragen von Futter zweckmäßig und üblich ist. Im dargestellten Ausführungsbeispiel gestattet die Getriebestufe I einen Direktantrieb der Ausgangswelle 12 mit der Drehzahl der Eingangswelle 11.

Das Getriebe 9 enthält ein erstes Zahnrad 13, das als Stirnzahnrad ausgebildet ist und fest auf der Eingangswelle 11 sitzt. Das erste Zahnrad 13 kämmt mit einem zweiten Zahnrad 14, das einen gegenüber dem ersten Zahnrad 13 verringerten Durchmesser aufweist, auf einer im Gehäuse 10 gelagerten Umgehungswelle 15 sitzt und mit einer Freilaufkupplung 16 versehen ist. Die Freilaufkupplung 16 gestattet eine Antriebsübertragung vom ersten Zahnrad 13 über das zweite Zahnrad 14 auf die Umgehungswelle 15 und ist bevorzugt als Klemmkörper-Freilaufkupplung ausgebildet.

Die Umgehungswelle 15 enthält ein drittes Zahnrad 17, das drehfest auf der Welle 15 sitzt und dessen Durchmesser bevorzugt kleiner als der des zweiten Zahnrades 14 ist. Das dritte Zahnrad 17 kämmt mit einem vierten Zahnrad 18, das fest auf der Ausgangswelle 12 sitzt. Das Zahnrad 18 hat einen Durchmesser, der bevorzugt größer als der des dritten Zahnrades 17 und der des ersten Zahnrades 13 ist. Allerdings könnte das dritte Zahnrad 17 so groß wie das zweite Zahnrad 14 sein und das vierte Zahnrad 18 so groß wie das erste Zahnrad 13.

Zwischen der Ausgangswelle 12 und der Eingangswelle 11 ist eine Kupplung 19 vorgesehen, die bevorzugt hydraulisch betätigt wird und im geschalteten Zustand die Ausgangswelle 12 direkt an die Eingangswelle 11 ankuppelt, während im gelösten Zustand der Kupplung 19 sich Eingangswelle 11 und Ausgangswelle 12 unabhängig voneinander drehen können. Die Kupplung ist bevorzugt eine hydraulische Lamellenkupplung (kurze Reaktionszeit) mit sehr kleinem Volumen von beispielsweise 20 cm³, die mit etwa ab 20 bar kuppelt, kann jedoch auch jede andere synchronisierte, mechanische, oder elektrische Kupplung sein.

Im Gehäuse 10 ist weiterhin eine Schalteinrichtung 20 angeordnet, die in den Hydraulikkreislauf zum Betätigen der Kupplung 19 einwirkt. Die Schalteinrichtung 20 ist im Grunde eine Pumpe mit einem Proportionalventil mit Elektronik, die das Auflaufen, also das Kuppeln, insbesondere den Ölfluss und den Anlaufdruck bei Zustandekommen der Kupplung (sanftes Anlaugen, ohne Stoß) regelt. Die Schalteinrichtung 20 dient zum Schalten auf die erste Getriebestufe I unabhängig vom Hydraulikkreislauf des Schleppers und nur über die Anlaufstufe A. Die Steuerung der Kupplung könnte jedoch auch über die Steuereinrichtung 100 (Isobus-System) erfolgen.

Die Schalteinrichtung 20 enthält eine Zahnradpumpe 21, die in der Anlaufstufe A, insbesondere über das vierte Zahnrad 18 angetrieben wird und durch diesen Antrieb einen Hydraulikmitteldruck aufbaut. Die Schalteinrichtung enthält weiterhin ein nicht dargestelltes Proportionalventil, das den Druck festlegt, auf den die Pumpe 21 das Hydraulikmittel bringen muss, damit die Kupplung 19 geschaltet werden kann.

Es ist weiterhin ein Kühlsystem 40 und ein Hydraulikmittel-Kreislauf 50 vorgesehen.

Das Getriebe 9 arbeitet wie folgt. Wird der Antrieb über die Zapfwelle 10 angeschaltet, so dreht sich zunächst die Eingangswelle 11 mit dem ersten Zahnrad 13, während das Proportionalventil ein Einrücken der hydraulischen Kupplung 19 sperrt (Pumpe ohne Druck). Es kann somit nicht geschaltet werden. Der Antrieb läuft somit über die Anlaufstufe A, d.h. über das erste Zahnrad 13 wird das zweite Zahnrad 14, durch das Zahnrad 14 und die Freilaufkupplung 16 die Umgehungswelle 15 und das dritte Zahnrad 17, und durch das dritte Zahnrad 17 das vierte Zahnrad 18 und die Ausgangswelle 12 angetrieben. Die Ausgangswelle 12 treibt dann über die Winkelgetriebe 6 die Mischwerkzeuge 5 mit einer geringen Drehzahl und demzufolge einem hohen Drehmoment an.

Gleichzeitig wird jedoch auch durch das vierte Zahnrad 18 die Zahnradpumpe 21 der Schalteinrichtung 20 angetrieben, wodurch sich der Druck des Hydraulikmittels erhöht und ein Schalten der Hydraulikkupplung 19 freigegeben ist.

Ist die Kupplung 19 geschaltet, so wird in der Getriebestufe I das vierte Zahnrad 18 direkt von der Eingangswelle 11 angetrieben, diesmal mit einer höheren Geschwindigkeit als über die Anlaufstufe A. Das vierte Zahnrad 18 treibt nunmehr in umgekehrter Übertragungsrichtung, d.h. in einer Richtung zurück auf die Eingangswelle 11, das dritte Zahnrad 17 und somit die Umgehungswelle 15 an, die nunmehr schneller läuft als das zweite Zahnrad 14, das nach wie vor vom ersten Zahnrad 13 angetrieben wird. Dadurch wird die Freilaufkupplung 16 gelöst und trennt den Antriebszug über die Anlaufstufe A.

Steht die Eingangswelle 11 still, wird auch die Zahnradpumpe 21 nicht mehr angetrieben und der Druck fällt auf Null, so dass beim neuerlichen Anfahren der Antrieb wiederum zunächst über die Anlaufstufe A läuft.

Das Getriebe 9 eignet sich besonders für Mischeinrichtungen bis etwa 25m³ also mittlere bis große Mischwagen. In der Anlaufstufe A und beim Mischen wird mit einer Übersetzung ins Langsame von etwa 1,7 : 1, beim Ausdosieren mit 1 : 1 gearbeitet.

Das Getriebe 9 wird zum Erhöhen der Sicherheit und zum Schutz der Elemente im Antriebszug weiterhin mit den nachfolgenden Bauteilen versehen. So ist beispielsweise eine Einrichtung 104 zum Feststellen der Temperatur im Getriebe 9 vorgesehen. Die Einrichtung 104 kann ein üblicher Temperaturgeber oder -sensor sein. Die Einrichtung 104 ist bevorzugt direkt an der Kupplung 19 (Lamellenkupplung) vorgesehen, wo die höchsten Temperaturen beim Schalten auftreten. Die Einrichtung 104 ist mit der Steuerung 100 verbunden und liefert an diese ein der Temperatur äquivalentes Signal. Die Steuerung 100 vergleicht dieses Signal mit einem vorbestimmten Temperatur-Grenzwert und verhindert, dass die Kupplung 19 geschaltet wird, wenn die Temperatur zu hoch ist, und gibt die Schaltung der Kupplung 19 frei, wenn die Temperatur sich unterhalb des Grenzwertes befindet. Wird ein Überschreiten des Grenzwertes an der Anzeigetafel 102 angezeigt, so gibt dies dem Benutzer die Information, dass beispielsweise die Kupplung durchrutscht und/oder das Kühlsystem 40 nicht funktioniert.

Die Steuerung 100 kann weiterhin eine Zeitschalteinrichtung enthalten, die verhindert, dass die Schaltvorgänge, insbesondere an der Kupplung 19, zu schnell aufeinanderfolgen, und sich die Kupplung 19 zu stark erwärmt. Durch die Zeitverzögerung wird sichergestellt, dass die Kupplung 19 durch die Kühlung 40 ausreichend gekühlt wird, bevor ein emeuter Schaltvorgang stattfindet. Dies ist besonders wichtig, wenn häufig Startvorgänge durchgeführt werden.

Das Getriebe 9 kann weiterhin mit einem Drehzahlgeber 105 versehen sein, der ebenfalls mit der Steuerung 100 verbunden ist. Der Drehzahlgeber ist in der Nähe der Eingangswelle 11 angeordnet und stellt die Drehzahl dieser Eingangswelle fest. Dieser Drehzahlgeber verhindert eine Beschädigung durch eine unkorrekte Einstellung und verhindert eine Beschädigung der Kupplungen, wenn mit zu niedriger Geschwindigkeit gefahren wird. Statt des Drehzahlgebers 105 kann auch eine Einrichtung zum Messen des Drehmoments vorgesehen sein. Der Drehzahlgeber gestattet einen hohen Überwachungsgrad des Getriebes 9 und schützt die Kupplungen vor einem zu hohen Drehmoment, wenn die Antriebsmaschine (der Motor) des Schleppers unter hoher Last abgewürgt wird.

Weiterhin ist eine Einrichtung 106 zum Feststellen des Drucks in einem Hydaulikmittel-Kreislauf 50 vorgesehen, der die Kupplung 19 betätigt. Die Einrichtung 106 ist ebenfalls mit der Steuereinrichtung 100 verbunden und stellt sicher, dass ausreichend Druck und genug Öl zum Betätigen der Kupplung 19 vorhanden ist.

Das Getriebe 9 gemäß Figur 2 kann durch eine oder mehrere weitere Getriebestufen erweitert werden, wobei Figur 3 ein Ausführungsbeispiel eines Getriebes 29 zeigt, bei dem die Anlaufstufe A und die Getriebestufe I des Ausführungsbeispiels gemäß Figur 2 und zusätzlich eine weitere Getriebestufe II vorgesehen ist. Die konstruktive Ausgestaltung der Anlaufstufe A und der Getriebestufe I entsprechen dem Ausführungsbeispiel gemäß Figur 2 sind mit den gleichen Bezugszeichen versehen und werden nicht nochmals erläutert, In der Anlaufstufe A ist jedoch eine Untersetzung im Bereich von etwa 3,5 - 4,0 : 1 und in der Getriebestufe I wiederum 1 : 1 verwirklicht. Die Getriebestufe II ist ebenfalls eine Getriebestufe mit höherer Drehzahl (Übersetzungsverhältnis etwa 1,7 : 1), liegt jedoch in der Drehzahl zwischen der Anlaufstufe A und der Getriebestufe I; liefert somit eine Drehzahl an der Ausgangswelle 12, die höher ist als in der Anlaufstufe A jedoch niedriger als in der Getriebestufe I, so dass zwischen einer niedrigeren Drehzahl in der Getriebestufe II, wie sie beispielsweise zum Mischen eingesetzt werden kann, und einer höheren Drehzahl in der Getriebestufe I, wie sie beispielsweise zum Ausgeben des Futters aus dem Behälter 3 verwendet werden kann, gewählt werden kann. Dabei liegen, bei 1000 U/min Eingangsdrehzahl, die Drehzahlen beim Anlaufen bei 250 - 300 U/min, beim Mischen bei 500 - 650 U/min und beim Ausdosieren bei bis zu 1000 U/min.

Die Getriebestufe II ist ebenfalls als Stirnradgetriebe ausgebildet und enthält ein fünftes Zahnrad 30, das auf einer Umgehungswelle 31 sitzt, die im Gehäuse 10 gelagert ist und mit dem ersten Zahnrad 13 kämmt. Bevorzugt ist zwischen dem fünften Zahnrad 30 und der Umgehungswelle 31 eine zweite Freilaufkupplung 32 vorgesehen, die jedoch, wie nachfolgend beschrieben nicht ungedingt notwendig ist.

Das vierte Zahnrad 18 kämmt mit einem sechsten Zahnrad 33, das ebenfalls drehbar im Gehäuse 10 gelagert ist. Das sechste Zahnrad 33 ist koaxial zur Achse der zweiten Umgehungswelle 31 gelagert und mit Hilfe einer Kupplung 34, vorzugsweise einer hydraulischen Lamellenkupplung, mit der zweiten Umgehungswelle 31 bewegungsübertragend zu verbinden.

Das fünfte Zahnrad 30 ist bevorzugt relativ klein gegenüber dem ersten Zahnrad 13 und kleiner als das sechste Zahnrad 33, während das sechste Zahnrad 33 klein gegenüber dem vierten Zahnrad 18 und das vierte Zahnrad 18 größer als das erste Zahnrad 13 ist. Dadurch muss von der Kupplung ein möglichst geringes Drehmoment geschaltet werden.

Auch das Getriebe 29 enthält die Schalteinrichtung 20 mit der Zahnradpumpe 21, die hier jedoch aus konstruktiven Gründen über das sechste Zahnrad 33 angetrieben wird. Die Schalteinrichtung 20 wirkt in diesem Ausführungsbeispiel auf die Kupplung 34 und verhindert das Einrücken der Kupplung 34 solange, solange über die Anlaufstufe A noch nicht der erforderliche Druck aufgebaut wurde.

Wurde der erforderliche Druck durch die Zahnradpumpe 21 aufgebracht, so kann die Kupplung 34 geschaltet werden. Ist die Kupplung 34 geschaltet, so wird über das erste Zahnrad 13 das fünfte Zahnrad 30 und bei verbundener Freilaufkupplung 32 über die Umgehungswelle 31 das sechste Zahnrad 33 und von diesem das vierte Zahnrad 18 und somit die Ausgangswelle 12 angetrieben. Über das vierte Zahnrad 18 wird jedoch auch das dritte Zahnrad 17 und die Umgehungswelle 15 der Anlaufstufe A gedreht, so dass die Freilaufkupplung 16 gelöst wird.

Soll die Drehzahl weiter erhöht werden, so wird die erste Kupplung 19 geschaltet. Ist eine zweite Freilaufkupplung 32 vorhanden, so kann die hydraulische Kupplung 34 der Getriebestufe II geschaltet bleiben. Dann erfolgt der Antrieb der Ausgangswelle 12 direkt durch die Eingangswelle 11, während durch das erste Zahnrad 13 das fünfte Zahnrad 30 und durch das vierte Zahnrad 18 das sechste Zahnrad 33 angetrieben wird, was entweder, bei geschalteter hydraulischer Kupplung 34 zum Lösen der Freilaufkupplung 32 führt, so dass dadurch die beschriebene Antriebsbewegung möglich ist, oder aber die zweite hydraulische Kupplung 34 wird gelöst, was die zweite Freilaufkupplung 32 überflüssig macht. Auch in der Getriebestufe I und 11 wird somit die Zahnradpumpe 21 angetrieben und hält den Druck aufrecht.

Wird der Antrieb jedoch stillgesetzt, so fällt der durch die Zahnradpumpe 21 erzeugte Druck ab, und beim nächsten Anfahren steht wiederum die Anlaufstufe A zur Verfügung.

Auch das Getriebe 29 enthält die bereits anhand Fig. 2 beschriebenen Einrichtungen zum Feststellen der unterschiedlichsten Parameter. So ist beispielsweise jeweils eine Einrichtung 104a, 104b zum Feststellen der Temperatur vorgesehen. Die Einrichtungen 104a, 104b sind jeweils einer der Kupplungen 19, 34 zugeordnet und wirken wie die Einrichtung 104, die anhand Fig. 2 beschrieben wurde.

Auch das Getriebe 29 enthält die Einrichtung 105 zum Feststellen einer Drehzahl bzw. eines Drehmoments, die der Eingangswelle 11 zugeordnet ist. Die Einrichtung 105 entspricht der Einrichtung 105, die bereits anhand Fig. 2 beschrieben wurde.

Schließlich ist auch bei diesem Ausführungsbeispiel die Einrichtung 106 zum Feststellen des Drucks eines Hydraulikmittels in einem Hydraulikkreislauf 50 zum Betätigen der Kupplungen 19, 34 vorgesehen, wie sie bereits anhand Fig. 2 beschrieben wurde. Auch dem Getriebe 29 der Fig. 3 ist der bereits beschriebene Zeitschalter zugeordnet, damit eine Kühlung der Kupplungen 19, 34 über den Kühlmittelkreislauf 40 sichergestellt wird.

Wird der Futtermischer verwendet, so wird dieser zunächst gestartet, so dass der Antrieb läuft. Dann verlässt die Bedienperson den Schlepper und belädt mit einer anderen Einrichtung den Mischbehälter. Es ist logisch, dass der Futtermischer zunächst mit der höchsten Geschwindigkeit läuft, da der Mischer leer ist und graduell zu einem Punkt kommt, an dem die Mischergeschwindigkeit heruntergeschaltet wird, wenn der Mischer beladen wird und die Belastung des Antriebs steigt, um zu verhindem, dass der Schlepper abgewürgt wird, um Brennstoff zu sparen, um den Antriebszug zu schützen, oder um einen Antrieb mit geringerer Leistung verwenden zu können. Das Mischen des Futters kann dann in einem niedrigeren Gang beendet werden, was ein automatisches Herunterschalten erfordert. Dann wird der Mischer für einen Transport abgeschaltet. Dann muss der Mischer neuerüch gestartet werden, im geringsten Gang, um das Futter im Behälter 3 in Bewegung zu setzen. Dann muss der Mischer in einen höheren Gang geschaltet werden, um das Futter mit einer annehmbaren hohen Geschwindigkeit ausgeben und verteilen zu können. Schließlich muss der Mischer mit der höchsten Geschwindigkeit laufen, um genügend Geschwindigkeit bereitzustellen, um den Mischbehälter vollständig zu leeren.

Mit der erfindungsgemäßen Ausgestaltung kann diese Betriebsweise erreicht werden, ohne dass die Gefahr besteht, dass das Getriebe zwischenzeitlich zu oft und unnötig zwischen den einzelnen Gängen wechselt. Durch die Verwendung eines Gewichtswertes zum Steuern des Schaltvorgangs wird ein stabiler Wert bereitgestellt, der sich nicht, wie dies beim Drehmoment oder der Drehzahl der Fall ist, kurzzeitig ändert.

Vielmehr verläuft die Änderung im Gewicht vorhersehbar und auf kontrollierte Weise, da sich die Menge des Futters im Behälter nur auf kontrollierte und vorhersehbare Weise ändert, das sowohl das Be- als auch das Entladen des Mischbehälters im Wesentlichen kontinuierlich oder in vorhersagbaren Schritten erfolgt. Durch die Einrichtungen 104 bis 106 wird weiterhin sichergestellt, dass auch vom Gewicht unabhängige Parameter, wenn sie über ein akzeptables Maß hinausgehen, die Schaltvorgänge der Getriebe 9, 29 derart beeinflussen, dass Beschädigungen im System verhindert werden.

Die beschriebenen Bauteile, insbesondere die Klemmkörper-Freilaufkupplungen und die Lamellenkupplungen sind besonders für die Zwecke der vorliegenden Erfindung geeignet, da Klemmkörper ruckfrei und im Wesentlichen unverzüglich (weniger als 1° Verzögerung) eingreifen. Lamellenkupplungen sind wesentlich wirksamer als Drehmomentwandler und können unter bestimmten Bedingungen mit einem hohen Trägheitsmoment fertig werden. Die Getriebe 9, 29 schalten vollständig automatisch, bieten jedoch eine vollständige Steuerung über die ausgewählte Geschwindigkeit. Das System kann leicht an die zur Verfügung stehende Leistung des Schleppers angepasst werden. Die Getriebe können ohne Probleme zu geringeren Drehzahlen geschaltet werden, wobei die Klemmkörper automatisch und ruckfrei eingreifen. Die Steuereinrichtung bietet weiterhin einen kompletten Schutz der Kupplungen und eine Kontrolle, des Rutschens, der Temperaturen und der Drücke.

Im Betrieb startet die Mischeinrichtung im Leerzustand und schaltet automatisch vom ersten auf den zweiten (Zeitverzug) und den dritten (Zeitverzug) Gang, vorausgesetzt, dass dies durch einen ausreichenden Druck, eine akzeptable Temperatur und eine akzeptable Drehzahl gestattet wird. Wenn dann beim Beladen der Gewichts-Grenzwert überschritten wird, wird zunächst auf den zweiten Gang zurückgeschaltet. Wenn der nächste Gewichts-Grenzwert überschritten wird, wird dann auf den ersten Gang zurückgeschaltet (Überlast). Ist das Mischen beendet, wird die Zapfwelle abgeschaltet und die Maschine heruntergefahren. Beim neuerlichen Anfahren des Antriebs wird automatisch vom ersten auf den zweiten Gang geschaltet, vorausgesetzt, dies wird durch die festgestellte Temperatur, das Gewicht, den Druck und die Drehzahl bei voller Belastung gestattet (vorab für die bestimmte Art des Futters usw. festgesetzt).

Wenn der Start nicht gelingt, schaltet die Einrichtung zum Feststellen der Drehzahl den Versuch ab und der Zeitschalter bestimmt, wann der nächste Versucht gestartet werden kann. Die Einrichtung zum Feststellen der Temperatur verhindert die Beschädigung durch eine Überlast oder ein Durchrutschen. Ist der Start erfolgreich, wird das Futter im zweiten Gang ausgegeben. Wenn so viel Futter ausgegeben wurde, dass das Gewicht unter den vorbestimmten Gewichts-Grenzwert fällt, schaltet das System automatisch in den dritten Gang, wenn dies durch die festgestellte Drehzahl, die Temperatur, den Hydraulikdruck usw. gestattet wird.

## Patentansprüche

1. Futtermischer (1) mit:
einem Mischbehälter (3) zur Aufnahme von Futter;
wenigstens einem im Mischbehälter (3) drehend angeordneten Mischwerkzeug (5);
einer Antriebseinrichtung (7) zum Antreiben des Mischwerkzeugs (5);
einem mit der Antriebseinrichtung (7) verbundenen, automatisch schaltbaren Getriebe (9) mit einer niedrigen Schaltstufe für eine erste Drehzahl des Mischwerkzeugs (5) und wenigstens einer höheren Schaltstufe für eine zweite Drehzahl des Mischwerkzeugs (5),
wobei die zweite Drehzahl höher ist als die erste Drehzahl; und
einer Steuereinrichtung (100) zum Schalten des Getriebes (9);
**gekennzeichnet durch**
eine Einrichtung (103) zum Feststellen des Gewichts des zu mischenden Futters; und
eine Einrichtung zum Vergleichen des festgestellten Gewichts mit einem vorbestimmten Grenzwert für wenigstens die höhere Schaltstufe, die mit der Steuereinrichtung (100) derart verbunden ist, dass ein Antrieb des Mischwerkzeugs (5) über die höhere Schaltstufe nur dann möglich ist, wenn das festgestellte Gewicht den Grenzwert nicht übersteigt.

2. Futtermischer nach Anspruch 1, wobei die Steuereinrichtung (100) so ausgebildet ist, dass ein Schalten in die höhere Schaltstufe verhindert wird, wenn das festgestellte Gewicht den Grenzwert übersteigt.

3. Futtermischer nach Anspruch 1, wobei die Steuereinrichtung (100) so ausgebildet ist, dass aus der höheren Schaltstufe automatisch in die niedrige Schaltstufe geschaltet wird, wenn das festgestellte Gewicht den Grenzwert übersteigt.

4. Futtermischer nach Anspruch 1, wobei die Steuereinrichtung (100) so ausgebildet ist, dass automatisch in die höhere Schaltstufe geschaltet wird, wenn das festgestellte Gewicht den Grenzwert unterschreitet.

5. Futtermischer nach Anspruch 1, ferner enthaltend eine Einrichtung (104) zum Feststellen einer Temperatur am Getriebe (9), eine Einrichtung zum Vergleichen der festgestellten Temperatur mit einem Temperatur-Grenzwert, und eine Einrichtung zum Verhindern eines Schaltvorgangs, wenn die festgestellte Temperatur den Grenzwert übersteigt.

6. Futtermischer nach Anspruch 5, wobei das Getriebe (9) eine Kupplung (19) enthält, die mit einem Kühlmittel gekühlt ist, und die Einrichtung (104) zum Feststellen der Temperatur eine Einrichtung zu Feststellen der Temperatur im Kühlmittel enthält.

7. Futtermischer nach Anspruch 5, ferner enthaltend eine Zeitschalteinrichtung zum Verhindern eines zweiten Schaltvorgangs innerhalb einer vorbestimmten Zeitspanne nach einem ersten Schaltvorgang.

8. Futtermischer nach Anspruch 1, ferner enthaltend eine Einrichtung (105) zum Feststellen einer Eingangsdrehzahl in das Getriebe (9), eine Einrichtung zum Vergleichen der festgestellten Drehzahl mit einem Drehzahl-Grenzwert, und eine Einrichtung zum Verhindern eines Schaltvorgangs, wenn die festgestellte Drehzahl den Grenzwert unterschreitet.

9. Futtermischer nach Anspruch 1, wobei das Getriebe (9) eine durch ein Hydraulikmittel betätigte Kupplung (19) und eine Einrichtung (106) zum Feststellen eines Drucks im Hydraulikmittel an der Kupplung (19) enthält.

10. Futtermischer nach Anspruch 1, wobei die niedrige Schaltstufe des Getriebes (9) eine Anlaufstufe mit einer Klemmkörper-Freilaufkupplung (16) enthält.

11. Futtermischer nach Anspruch 1, wobei die höhere Schaltstufe des Getriebes (9) eine Lamellenkupplung enthalt.

12. Futtermischer nach Anspruch 1, wobei der Gewichts-Grenzwert einstellbar ist.

13. Futtermischer nach Anspruch 1, wobei der Gewichts-Grenzwert auf ein Gewicht von 10.000 kg eingestellt wird.

14. Futtermischer nach Anspruch 1, wobei ein Gewichtssensor zum Messen des Gewichts des Futters vorgesehen ist.

15. Verfahren zum Antreiben eines Mischwerkzeugs (5) zum Mischen von Futter in einem Futtermischer (1), wobei das Mischwerkzeug (5) über ein automatisch schaltbares Getriebe (9) mit einer niedrigen Schaltstufe mit einer niedrigen Drehzahl und wenigstens einer höheren Schaltstufe mit einer höheren Drehzahl von einem Antrieb (7) rotierend angetrieben wird, **dadurch gekennzeichnet, dass** das Gewicht des Futters bestimmt und mit einem vorbestimmten Grenzwert für wenigstens die höhere Schaltstufe verglichen wird; und wobei das Mischwerkzeug (5) nur dann über die höhere Schaltstufe angetrieben wird, wenn das festgestellte Gewicht den Grenzwert nicht übersteigt.

16. Verfahren nach Anspruch 15, wobei ein Schalten in die höhere Schaltstufe verhindert wird, wenn das festgestellte Gewicht den Grenzwert übersteigt.

17. Verfahren nach Anspruch 15, wobei aus der höheren Schaltstufe automatisch in die niedrige Schaltstufe geschaltet wird, wenn das festgestellte Gewicht den Grenzwert übersteigt.

18. Verfahren nach Anspruch 15, wobei automatisch in die höhere Schaltstufe geschaltet wird, wenn das festgestellte Gewicht den Gewichts-Grenzwert unterschreitet.

19. Verfahren nach Anspruch 15, wobei eine Temperatur am Getriebe (9) festgestellt und mit einem Temperatur-Grenzwert verglichen wird, und wobei ein Schaltvorgang verhindert wird, wenn die festgestellte Temperatur den Grenzwert übersteigt.

20. Verfahren nach Anspruch 15, wobei das Getriebe (9) eine Kupplung (19) enthält, die mit einem Kühlmittel gekühlt ist, und die Temperatur im Kühlmittel festgestellt wird.

21. Verfahren nach Anspruch 15, wobei ein zweiter Schaltvorgang innerhalb einer vorbestimmten Zeitspanne nach einem ersten Schaltvorgang verhindert wird.

22. Verfahren nach Anspruch 15, wobei eine Eingangsdrehzahl in das Getriebe (9) festgestellt, die festgestellte Drehzahl mit einem Drehzahl-Grenzwert verglichen wird, und ein Schaltvorgang verhindert wird, wenn die festgestellte Drehzahl den Grenzwert unterschreitet.

23. Verfahren nach Anspruch 15, wobei das Getriebe (9) eine durch ein Hydraulikmittel betätigte Kupplung (19) enthält und ein Druck im Hydraulikmittel an der Kupplung (19) festgestellt wird.

24. Verfahren nach Anspruch 15, wobei die niedrige Schaltstufe des Getriebes (9) eine Anlaufstufe mit einer Klemmkörper-Freilaufkupplung (16) enthält.

25. Verfahren nach Anspruch 15, wobei die höhere Schaltstufe des Getriebes (9) eine Lamellenkupplung enthält.

26. Verfahren nach Anspruch 15, wobei der Gewichts-Grenzwert einstellbar ist.

27. Verfahren nach Anspruch 15, wobei der Gewichts-Grenzwert auf ein Gewicht von 10.000 kg eingestellt wird.

28. Verfahren nach Anspruch 15, wobei ein Gewichtssensor zum Messen des Gewichts des Futters vorgesehen ist.

29. Verfahren nach Anspruch 15, wobei das Gewicht berechnet wird.

## Claims

1. A fodder mixer (1) with:
a mixing receptacle (3) for receiving fodder;
at least one mixing implement (5) mounted to rotate in the mixing receptacle (3);
a drive device (7) for driving the mixing implement (5);
an automatically shiftable transmission (9) connected to the drive device (7) and with a low shift ratio for a first speed of rotation of the mixing implement (5) and at least one higher shift ratio for a second speed of rotation of the mixing implement (5), wherein the second speed of rotation is higher than the first speed of rotation; and
a control means (100) for shifting the transmission (9);
**characterised by**
a device (103) for determining the weight of the fodder to be mixed; and
a device for comparing the determined weight to a predetermined maximum permissible value for at least the higher shift ratio, which device is connected to the control means (100) in such a way that driving of the mixing implement (5) via the higher shift ratio is only possible if the determined weight does not exceed the maximum permissible value.

2. A fodder mixer according to Claim 1, wherein the control means (100) is designed so that shifting into the higher shift ratio is prevented when the determined weight exceeds the maximum permissible value.

3. A fodder mixer according to Claim 1, wherein the control means (100) is designed so that automatic shifting from the higher shift ratio into the lower shift ratio takes place when the determined weight exceeds the maximum permissible value.

4. A fodder mixer according to Claim 1, wherein the control means (100) is designed so that automatic shifting into the higher shift ratio takes place when the determined weight is below the maximum permissible value.

5. A fodder mixer according to Claim 1, further comprising a device (104) for determining the temperature at the transmission (9), a device for comparing the determined temperature to a maximum permissible temperature value, and a device for preventing a shift operation when the determined temperature exceeds the maximum permissible value.

6. A fodder mixer according to Claim 5, wherein the transmission (9) includes a clutch (19) which is cooled by a coolant, and the device (104) for determining the temperature comprises a device for determining the temperature in the coolant.

7. A fodder mixer according to Claim 5, further comprising a timing device for preventing a second shift operation within a predetermined time interval after a first shift operation.

8. A fodder mixer according to Claim 1, further comprising a device (105) for determining an input speed of rotation into the transmission (9), a device for comparing the determined speed of rotation to a maximum permissible speed of rotation value and a device for preventing a shift operation when the determined speed of rotation falls below the maximum permissible value.

9. A fodder mixer according to Claim 1, wherein the transmission (9) includes a clutch (19) actuated by a hydraulic medium and a device (106) for determining the pressure in the hydraulic medium at the clutch (19).

10. A fodder mixer according to Claim 1, wherein the low shift ratio of the transmission (9) comprises a starting ratio with a sprag-type freewheel clutch (16).

11. A fodder mixer according to Claim 1, wherein the higher shift ratio of the transmission (9) comprises a multiplate clutch.

12. A fodder mixer according to Claim 1, wherein the maximum permissible weight value is adjustable.

13. A fodder mixer according to Claim 1, wherein the maximum permissible weight value is adjusted to a weight of 10,000 kg.

14. A fodder mixer according to Claim 1, wherein a weight sensor is provided for measuring the weight of the fodder.

15. A method of driving a mixing implement (5) for mixing fodder in a fodder mixer (1), wherein the mixing implement (5) is driven in rotating motion by a drive (7) via an automatically shiftable transmission (9) with a low shift ratio at a low speed of rotation and at least one higher shift ratio at a higher speed of rotation,
**characterised in that** the weight of the fodder is determined and is compared to a predetermined maximum permissible value for at least the higher shift ratio; and wherein the mixing implement (5) is only driven via the higher shift ratio if the determined weight does not exceed the maximum permissible value.

16. A method according to Claim 15, wherein shifting into the higher shift ratio is prevented when the determined weight exceeds the maximum permissible value.

17. A method according to Claim 15, wherein automatic shifting from the higher shift ratio into the lower shift ratio takes place when the determined weight exceeds the maximum permissible value.

18. A method according to Claim 15, wherein automatic shifting into the higher shift ratio takes place when the determined weight is below the maximum permissible weight value.

19. A method according to Claim 15, wherein a temperature at the transmission (9) is determined and is compared to a maximum permissible temperature value, and wherein a shift operation is prevented when the determined temperature exceeds the maximum permissible value.

20. A method according to Claim 15, wherein the transmission (9) includes a clutch (19) which is cooled by a coolant, and the temperature in the coolant is determined.

21. A method according to Claim 15, wherein a second shift operation is prevented within a predetermined time interval after a first shift operation.

22. A method according to Claim 15, wherein an input speed of rotation into the transmission (9) is determined, the determined speed of rotation is compared to a maximum permissible speed of rotation value and a shift operation is prevented when the determined speed of rotation falls below the maximum permissible value.

23. A method according to Claim 15, wherein the transmission (9) includes a clutch (19) actuated by a hydraulic medium and a pressure in the hydraulic medium is determined at the clutch (19).

24. A method according to Claim 15, wherein the low shift ratio of the transmission (9) comprises a starting ratio with a sprag-type freewheel clutch (16).

25. A method according to Claim 15, wherein the higher shift ratio of the transmission (9) comprises a multiplate clutch.

26. A method according to Claim 15, wherein the maximum permissible weight value is adjustable.

27. A method according to Claim 15, wherein the maximum permissible weight value is adjusted to a weight of 10,000 kg.

28. A method according to Claim 15, wherein a weight sensor is provided for measuring the weight of the fodder.

29. A method according to Claim 15, wherein the weight is calculated.

## Revendications

1. Mélangeur de fourrage (1) comprenant :
- un conteneur de mélange (3) pour la réception de fourrage ;
- au moins un outil de mélange (5) monté tournant dans le conteneur de mélange (3) ;
- un dispositif d'entraînement (7) pour l'entraînement de l'outil de mélange (5) ;
- un mécanisme de transmission (9), qui peut être embrayé automatiquement, relié au dispositif d'entraînement (7), comprenant un étage d'embrayage inférieur pour une première vitesse de rotation de l'outil de mélange (5) et au moins un étage d'embrayage supérieur pour une seconde vitesse de rotation de l'outil de mélange (5), la seconde vitesse de rotation étant supérieure à la première vitesse de rotation ; et
- un dispositif de commande (100) pour l'embrayage du mécanisme de transmission (9) ;
**caractérisé par** un dispositif (103) pour établir le poids du fourrage à mélanger ; et un dispositif pour comparer le poids établi à une valeur limite prédéterminée pour au moins l'étage d'embrayage supérieur, qui est raccordé au dispositif de commande (100) de telle sorte qu'un entraînement de l'outil de mélange (5) par l'intermédiaire de l'étage d'embrayage supérieur ne soit possible que lorsque le poids établi n'excède pas la valeur limite.

2. Mélangeur de fourrage suivant la revendication 1, dans lequel le dispositif de commande (100) est réalisé de telle sorte qu'un embrayage dans l'étage d'embrayage supérieur est empêché lorsque le poids établi excède la valeur limite.

3. Mélangeur de fourrage suivant la revendication 1, dans lequel le dispositif de commande (100) est réalisé de telle sorte que l'on embraie automatiquement de l'étage d'embrayage supérieur dans l'étage d'embrayage inférieur lorsque le poids établi excède la valeur limite.

4. Mélangeur de fourrage suivant la revendication 1, dans lequel le dispositif de commande (100) est réalisé de telle sorte que l'on embraie automatiquement dans l'étage d'embrayage supérieur lorsque le poids établi tombe en dessous de la valeur limite.

5. Mélangeur de fourrage suivant la revendication 1, comprenant en outre un dispositif (104) pour établir une température au mécanisme de transmission (9), un dispositif pour comparer la température établie à une valeur limite de température, et un dispositif pour empêcher une opération d'embrayage lorsque la température établie excède la valeur limite.

6. Mélangeur de fourrage suivant la revendication 5, dans lequel le mécanisme de transmission (9) comporte un accouplement (19) qui est refroidi avec un agent réfrigérant, et le dispositif (104) pour établir la température comporte un dispositif pour établir la température dans l'agent réfrigérant.

7. Mélangeur de fourrage suivant la revendication 5, comprenant en outre un dispositif d'embrayage temporel pour empêcher une seconde opération d'embrayage dans une période temporelle prédéterminée après une première opération d'embrayage.

8. Mélangeur de fourrage suivant la revendication 1, comprenant en outre un dispositif (105) pour établir une vitesse de rotation d'entrée dans le mécanisme de transmission (9), un dispositif pour comparer la vitesse de rotation établie à une valeur limite de vitesse de rotation, et un dispositif pour empêcher une opération d'embrayage lorsque la vitesse de rotation établie tombe en dessous de la valeur limite.

9. Mélangeur de fourrage suivant la revendication 1, dans lequel le mécanisme de transmission (9) comporte un accouplement (19) actionné par un agent hydraulique et un dispositif (106) pour établir une pression dans l'agent hydraulique en l'accouplement (19).

10. Mélangeur de fourrage suivant la revendication 1, dans lequel l'étage d'embrayage inférieur du mécanisme de transmission (9) comporte un étage de démarrage comprenant un accouplement à roue libre à corps prisonniers(16).

11. Mélangeur de fourrage suivant la revendication 1, dans lequel l'étage d'embrayage supérieur du mécanisme de transmission (9) comporte un accouplement à disques.

12. Mélangeur de fourrage suivant la revendication 1, dans lequel la valeur limite de poids est réglable.

13. Mélangeur de fourrage suivant la revendication 1, dans lequel la valeur limite de poids est réglée à un poids de 10.000 kg.

14. Mélangeur de fourrage suivant la revendication 1, dans lequel un capteur de poids est prévu pour la mesure du poids du fourrage.

15. Procédé d'entraînement d'un outil de mélange (5) pour le mélange de fourrage dans un mélangeur de fourrage (1), dans lequel l'outil de mélange (5) est entraîné en rotation par un entraînement (7) par l'intermédiaire d'un mécanisme de transmission (9), qui peut être embrayé automatiquement, avec un étage d'embrayage inférieur avec une vitesse de rotation inférieure et au moins un étage de transmission plus élevé avec vitesse de rotation supérieure, **caractérisé en ce que** le poids du fourrage est déterminé et comparé à une valeur limite prédéterminée pour au moins l'étage d'embrayage supérieur ; et dans lequel l'outil de mélange (5) n'est entraîné par l'intermédiaire de l'étage d'embrayage supérieur que lorsque le poids établi n'excède pas la valeur limite.

16. Procédé suivant la revendication 15, dans lequel un embrayage dans l'étage d'embrayage supérieur est empêché lorsque le poids établi excède la valeur limite.

17. Procédé suivant la revendication 15, dans lequel on embraie automatiquement de l'étage d'embrayage supérieur dans l'étage d'embrayage inférieur lorsque le poids établi excède la valeur limite.

18. Procédé suivant la revendication 15, dans lequel on embraie automatiquement dans l'étage d'embrayage supérieur lorsque le poids établi tombe en dessous de la valeur limite de poids.

19. Procédé suivant la revendication 15, dans lequel une température en le mécanisme de transmission (9) est établie et comparée à une valeur limite de température, et dans lequel une opération d'embrayage est empêchée lorsque la température établie excède la valeur limite.

20. Procédé suivant la revendication 15, dans lequel le mécanisme de transmission (9) comporte un accouplement (19) refroidi par un agent réfrigérant, et la température dans l'agent réfrigérant est établie.

21. Procédé suivant la revendication 15, dans lequel une seconde opération d'embrayage est empêchée dans une période prédéterminée après une première opération d'embrayage.

22. Procédé suivant la revendication 15, dans lequel une vitesse de rotation d'entrée dans le mécanisme de transmission (9) est établie, la vitesse de rotation établie est comparée à une valeur limite de vitesse de rotation, et une opération d'embrayage est empêchée lorsque la vitesse de rotation établie tombe en dessous de la valeur limite.

23. Procédé suivant la revendication 15, dans lequel le mécanisme de transmission (9) comporte un accouplement (19) actionné par un fluide hydraulique et une pression dans le fluide hydraulique est établie en l'accouplement (19).

24. Procédé suivant la revendication 15, dans lequel l'étage d'embrayage inférieur du mécanisme de transmission (9) comporte un étage de démarrage avec un accouplement à roue libre à éléments prisonniers(16).

25. Procédé suivant la revendication 15, dans lequel l'étage d'embrayage supérieur du mécanisme de transmission (9) comporte un accouplement à disques.

26. Procédé suivant la revendication 15, dans lequel la valeur limite de poids est réglable.

27. Procédé suivant la revendication 15, dans lequel la valeur limite de poids est réglée à un poids de 10.000 kg.

28. Procédé suivant la revendication 15, dans lequel un capteur de poids est prévu pour la mesure du poids du fourrage.

29. Procédé suivant la revendication 15, dans lequel le poids est calculé.
